Europäisches Patentamt

European Patent Office

Office européen des brevets

(19)

(11) **EP 1 596 515 A1**

(12) **EUROPEAN PATENT APPLICATION**
published in accordance with Art. 158(3) EPC

(43) Date of publication:
 **16.11.2005 Bulletin 2005/46**

(51) Int Cl.⁷: **H04J 11/00**

(21) Application number: **04705506.6**

(22) Date of filing: **27.01.2004**

(86) International application number:
 **PCT/JP2004/000692**

(87) International publication number:
 **WO 2004/068758 (12.08.2004 Gazette 2004/33)**

(84) Designated Contracting States:
 **AT BE BG CH CY CZ DE DK EE ES FI FR GB GR
 HU IE IT LI LU MC NL PT RO SE SI SK TR**
 Designated Extension States:
 **AL LT LV MK**

(30) Priority: **31.01.2003 JP 2003023814**

(71) Applicant: **MATSUSHITA ELECTRIC INDUSTRIAL
 CO., LTD.
 Kadoma-shi, Osaka 571-8501 (JP)**

(72) Inventors:
 • **CHENG, Jun
 Kyoto 619-0224 (JP)**
 • **MIYOSHI, Kenichi
 Yokohama-shi, Kanagawa 236-0058 (JP)**

(74) Representative: **Grünecker, Kinkeldey,
 Stockmair & Schwanhäusser Anwaltssozietät
 Maximilianstrasse 58
 80538 München (DE)**

(54) **MULTI-CARRIER TRANSMISSION DEVICE, MULTI-CARRIER RECEPTION DEVICE, AND MULTI-CARRIER RADIO COMMUNICATION METHOD**

(57) A mutlicarrier transmitting apparatus, a multi-carrier receiving apparatus and a multicarrier radio communication method, which are capable of improving a throughput of a whole multicarrier radio communication system. Based on receiving SNR values of users 1 to 4 for all of the subcarriers 1 to 4 in a receiving SNR table made, the number of available users U(n) of each subcarrier is calculated. Subcarriers n* having the smallest number of the available users are searched, and a user k* showing the highest receiving SNR value among the researched subcarriers n* having the smallest number of the available users U(n) is searched. Subsequently, the subcarriers n* are allocated to the user k*.

FIG.6

**Description**

Technical Field

The present invention relates to a multicarrier transmitting apparatus, a multicarrier receiving apparatus and a multicarrier radio communication method.

Background Art

An adaptive multiuser orthogonal frequency division multiplexing (hereinafter referred to as OFDM) system utilizing OFDMwhich is one of multicarriermodulationmethods has heretofore been one which performs an effective scheduling on the whole system depending on a propagation environment of each moving terminal.

To be concrete, the adaptive multiuser OFDM system is one which, based on SNR (Signal to Noise Ratio) at the time of signal receiving by a moving terminal feedbacked from eachmoving terminal, allocates many suitable subcarriers to each user, and selects MCS (Modulation Coding Schemes) for each subcarrier. A subcarrier allocation method applicable to the conventional adaptive multiuser OFDM system is proposed in, for example, the following Literature 1.

(Literature 1) Muneyoshi URA, Yoshitaka HARA, and Yukiyoshi KAMIO "Investigation on High Efficiency Data Communication MC-CDMA Method", TECHNICAL REPORT OF IEICE. SST2000-127, A · P2000-261, RCS2000-261, MW2000-252(2001-03), pp.105-110

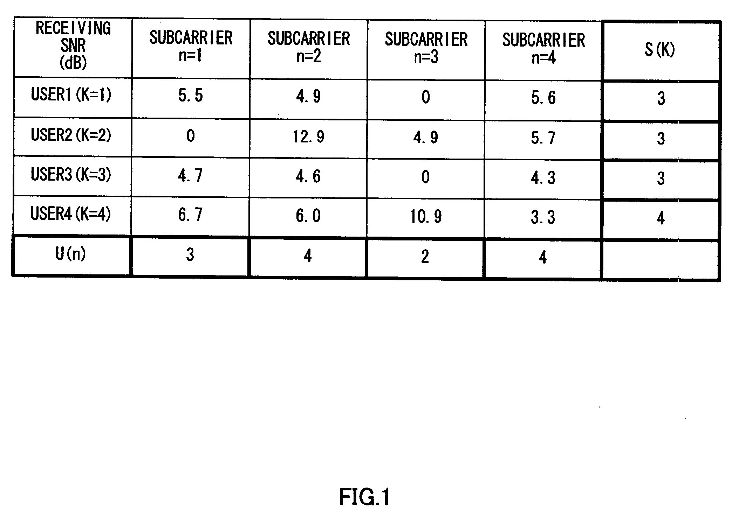

The subcarrier allocation method will be described with reference to Figs. 1 to 4. In Figs. 1 to 3, the table portion composed of panes drawn by thin lines represents receiving SNRs (dB) of the respective users k (k = 1 to 4) for the subcarriers n (n = 1 to 4); the column portion composed of panes drawn by thick lines represents the number of available subcarriers (S (k), k = 1 to 4); and the row portion composed of panes drawn by thick lines represents the number of available users (U(n), n = 1 to 4).

First of all, Fig. 1 illustrates a relation among the receiving SNR value (SNR (dB)), the number (S(k)) of the available subcarriers for users, and the number of the available users (U(n)), and exemplifies the receiving SNR values at the time four subcarriers (n = 1 to 4) are respectively received by four users (k = 1 to 4).

Furthermore, in the drawing, "the number of the available subcarriers S(k)" represents the number of the subcarriers available to each of the users 1 to 4, and "the number of the available users U (n) " represents the number of the users available for each of the subcarriers 1 to 4. In this drawing, a receiving SNRvalue satisfyingrequiredquality (bit error rate, for example, BER = $10^{-2}$) in each of the subcarriers 1 to 4 shall be set to 1.5 dB or more, and "0" shall be set for a user showing a receiving SNR value which is equal to or below the required quality. This user shall be incapable of a transmission.

First, in Fig. 1, paying the attention to a subcarrier 3 (U(3) = 2) having the smallest number of the available users U(n), the number of the available subcarriers (S(2) = 3) used by the user 2 (k=2) is smaller than the number of the available subcarriers (S(4) = 4) used by the user 4 (k=4). Accordingly, the subcarrier 3 is allocated to the user 2.

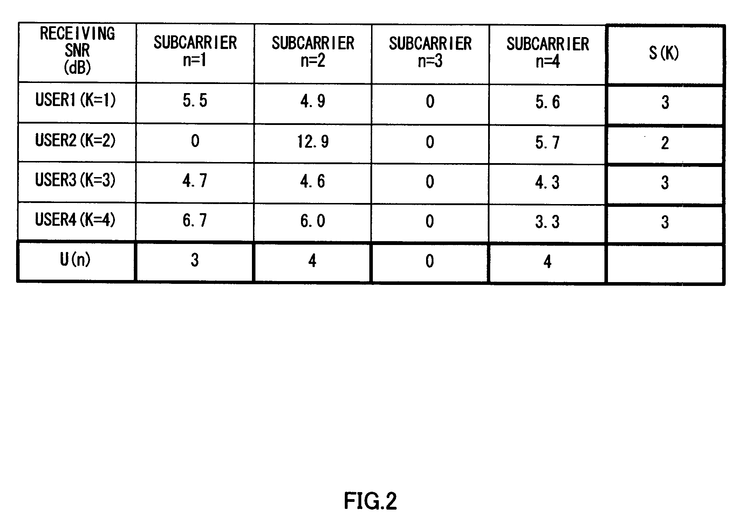

Subsequently, since the subcarrier 3 is allocated to the user 2 in Fig. 1, the receiving SNR value of the subcarrier 3 for each of the users is set to "0", and a state where the number of the available subcarriers S (k) and the number of the available users U(n) are newly calculated is shown in Fig. 2.

In Fig. 2, when the allocation of the subcarriers is further continued, the number of the available subcarriers S (2) used by the user 2 is 2 which is smallest. Accordingly, with respect to a next object to whom the subcarriers are to be allocated, two combinations (k = 2, n = 2) and (k = 2, n = 4) are determined as the allocation of the subcarriers to the user 2.

In this case, since the numbers of the users U(2) and U(4) available for the two possible subcarriers are equally 4, one combination (k = 2, n = 2) is determined arbitrarily, and the subcarrier 2 is allocated to the user 2.

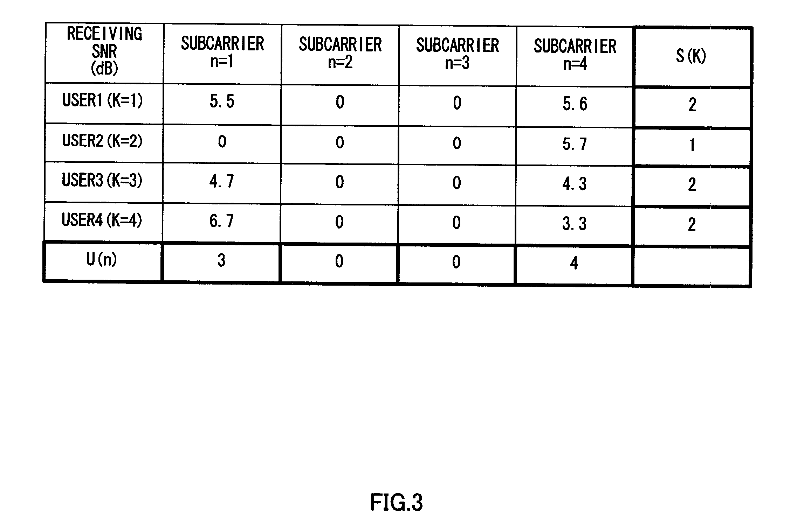

Furthermore, since the subcarrier 2 is allocated to the user 2 in Fig. 2, the receiving SNR values of the subcarrier 2 for each user is set to "0", and a state where the number of the available subcarriers S (k) and the number of the available users U(n) are newly calculated is shown in Fig. 3.

In Fig. 3, since the number of the available subcarriers S(2) used by the user 2 is 1 which is smallest, the subcarrier 4 is further allocated to the user 2.

Furthermore, since also the subcarrier 4 is allocated to the user 2 in Fig. 3, the receiving SNR value of the subcarrier 4 for each user is set to "0", and the number of the available subcarriers S (k) and the number of the available users U(n) are newly calculated. Since the numbers of the available subcarriers S(1), S(3) and S(4) to be used by the users 1, 3 and 4 are 1, the residual subcarrier 1 is arbitrarily allocated to the user 1.

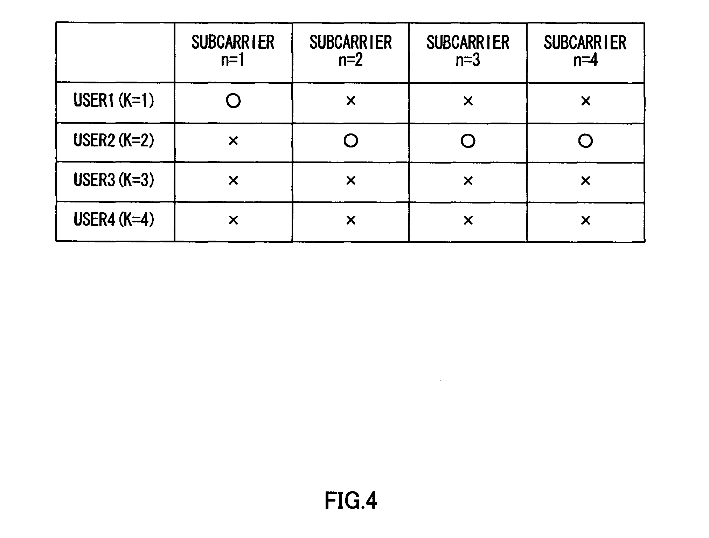

Fig. 4 shows a summary of allocation results of the subcarriers 1 to 4 to the users 1 to 4 as described above (○: used, ×: unused). Specifically, in this subcarrier allocation method, a subcarrier having the smallest number of the available users U (n), is first allocated to a user having the smallest number of the available subcarriers S(k), and afterward a subcarrier is allocated preferentially to a user having the small number of the available subcarriers S(k).

Furthermore, with respect to an OFDM system, an adaptive subcarrier allocation method is proposed, for example, in the following Literature 2.

(Literature 2) Yuanrun TENG, Kazutaka NAGAOSA, Kazuo MORI, and Hideo KOBAYASHI, "Investigation on OFDM System Using Adaptive Subchannel Allocation Method" TECHNICAL REPORT OF IEICE. DSP2002-174, SAT2002-124, RCS2002-243 (2003-01), pp.83-88

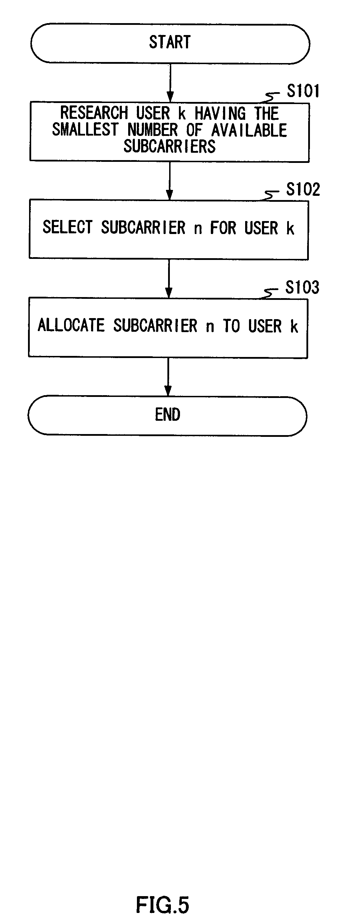

In this adaptive subcarrier allocation method, as shown in the flowchart in Fig. 5, the user k having the smallest number of the available subcarriers, is first found out among all users in Step S101. Subsequently, in Step S102, the subcarrier n having the smallest number of the available users is selected among subcarriers available to the user k. As a result of suchprocedures, the subcarrier n is allocated to the user k in Step S103.

However, in the conventional subcarrier allocation method, since a subcarrier is allocated preferentially to a user having the small number of the available subcarriers S (k), each subcarrier may not be allocated to a user showing the best transmission channel state (the largest receiving SNR value) in some cases, there has been a problem that a throughput of the whole OFDM system was decreased.

To be specific, in the conventional subcarrier allocation method, the subcarrier 3 is allocated to the user 2 in Fig. 1. The receiving SNR value of the user 2 with respect to the subcarrier 3 is 4.9 dB, and this value is smaller than that of the user 4 which is 10.9 dB. Therefore, it is considered to be best that the subcarrier 3 is allocated to the user 4.

Furthermore, since the subcarriers are dominantly allocated to a specific user, the subcarriers may not be allocated to other users in some cases, and there has been a problem that transmission of other users became impossible.

Disclosure of the Invention

An object of the present invention is to provide a multicarrier transmitting apparatus, a multicarrier receiving apparatus and a multicarrier communication method, which are capable of improving a throughput of the whole multicarrier radio communication system.

According to one aspect of the present invention, a multicarrier transmitting apparatus which performs a radio communication by use of a plurality of frequencies, the multicarrier transmitting apparatus comprising: a receiving section that receives channel quality information from a receiving apparatus of each user; a calculation section that calculates the number of users available for each subcarrier based on the channel quality information of each user received by the receiving section; a selection section that selects a subcarrier having the small number of the available users based on a calculation result by the calculation section; and an allocation section that allocates the subcarrier, selected by the selection section, to a user showing good channel quality among the users included in the number of the available users who are the objects to whom the subcarriers are to be allocated.

In the above described multicarrier transmitting apparatus, preferably the allocation section sets required quality of each of the users based on the channel quality information, and allocates the subcarrier selected by the selection section to a user whose channel quality satisfies the required quality among the users included in the number of the available users who are the objects to whom the subcarriers are to be allocated.

In the above described multicarrier transmitting apparatus, preferably the allocation section excludes the user to whom the subcarrier was allocated from the objects to whom the subcarriers are to be allocated until the allocations of the subcarriers to other users are finished.

According to another aspect of the present invention, a multicarrier receiving apparatus which performs a radio communication with the multicarrier transmitting apparatus, the multicarrier receiving apparatus comprising: an estimation section that estimates channel quality information related to a channel quality of each subcarrier; and a transmitting section that transmits the channel quality information estimated by the estimation section.

According to still another aspect of the present invention, a multicarrier radio communication method in a multicarrier transmitting apparatus which performs a radio communication by use of a plurality of frequencies, the method comprising: a receiving step of receiving channel quality information from a receiving apparatus of eachuser; a calculation stepof calculating the number of users available for each of subcarriers, based on the channel quality information of each of the users received in the receiving step; a selection step of selecting a subcarrier having the small number of the available users based on a calculation result in the calculation step; and an allocation step of allocating the subcarrier selected in the selection step to a user showing good channel quality among the users included in the number of the available users who are the objects to whom the subcarriers are to be allocated.

According to yet another aspect of the present invention, a multicarrier radio communication method in a multicarrier receiving apparatus which performs a radio communication with a multicarrier transmitting apparatus using the multicarrier radio communication method, the multicarrier radio communication method comprising: an estimation step of estimating channel qualityinformation related to channel quality of each subcarrier; and a transmission step of transmitting the channel quality information estimated in the estimation step.

BRIEF DESCRIPTION of DRAWINGS

Fig. 1 is a diagram showing a subcarrier allocation state of a conventional receiving SNR table;

Fig. 2 is a diagram showing a subcarrier allocation state of the conventional receiving SNR table;

Fig. 3 is a diagram showing a subcarrier allocation state of the conventional receiving SNR table;

Fig. 4 is a diagram showing a subcarrier allocation result of the conventional receiving SNR table;

Fig. 5 is a flowchart for explaining a conventional subcarrier allocation operation;

Fig. 6 is a block diagram showing constitutions of a transmitting apparatus and a receiving apparatus according to an embodiment of the present invention;

Fig. 7 is a flowchart for explaining an operation of a subcarrier/modulation scheme allocation processing unit in the transmitting apparatus according to the embodiment of the present invention;

Fig. 8 is a diagram showing a subcarrier allocation state of a receiving SNR table according to the embodiment of the present invention;

Fig. 9 is a diagram showing a subcarrier allocation state of the receiving SNR table according to the embodiment of the present invention; and

Fig. 10 is a diagram showing a subcarrier allocation result of the receiving SNR table according to the embodiment of the present invention.

BEST MODE for CARRYING OUT the INVENTION

The essence of the present invention is to improve a throughput of a whole multicarrier radio communication system by preferentially allocating a subcarrier having the small number of the available users to a user showing good channel quality.

An embodiment of the present invention will be described with reference to the accompanying drawings below in detail.

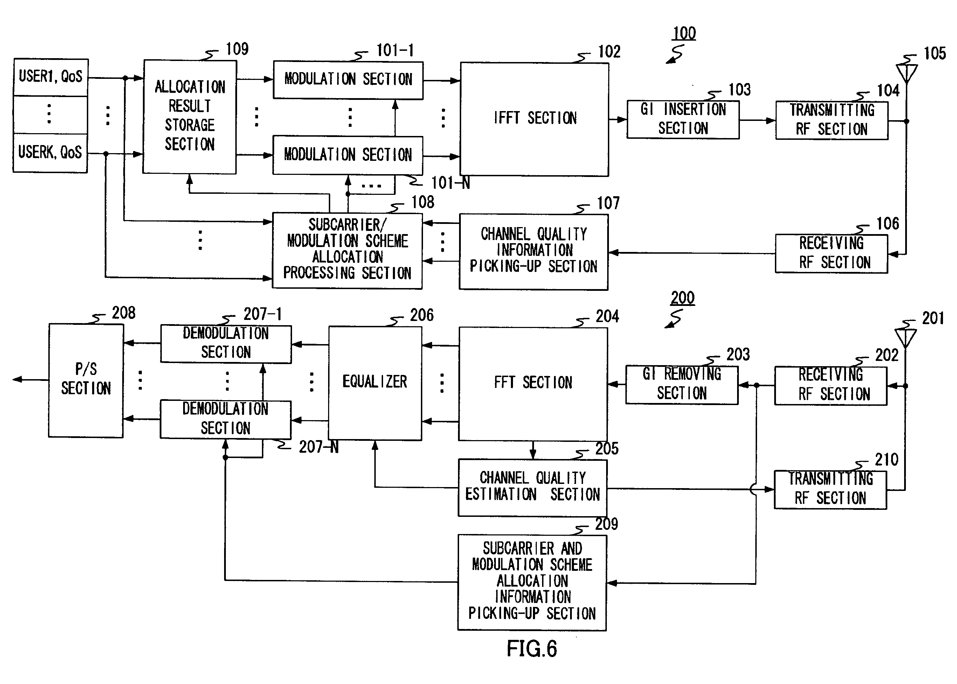

Fig. 6 is a block diagram showing constitutions of a multicarrier transmitting apparatus and a multicarrier receiving apparatus according to the embodiment of the present invention.

The multicarrier transmitting apparatus (hereinafter simply referred to as a transmitting apparatus) 100 shown in Fig. 6 is mainly constituted of modulation sections 101-1 to 101-N, an inverse fast Fourier transform (IFFT) section 102, a guard interval (GI) insertion section 103, a transmitting RF section 104, a transmitting/receiving duplex antenna 105, a receiving RF section 106, a channel quality information picking-up section 107, a subcarrier/modulation scheme allocation processing section 108, and an allocation result storage section 109.

Furthermore, the multicarrier receiving apparatus (hereinafter simply referred to as a receiving apparatus) 200 shown in Fig. 6 is mainly constituted of a transmitting/receiving duplex antenna 201, a receiving RF section 202, a guard interval (GI) removing section 203, a fast Fourier transform (FFT) section 204, a channel quality estimation section 205, an equalizer 206, demodulation sections 207-1 to 207-N, a parallel/serial (P/S) conversion section 208, a subcarrier and modulation scheme allocation information picking-up section 209, and a transmitting RF section 210. The receiving apparatus 200 is a mobile station of a k0-th user among users in the multicarrier radio communication system.

The modulation sections 101-1 to 101-N have code modulation functions which are different from each other, and adopt modulation scheme including 64QAM (Quadrature Amplitude Modulation), 16QAM, QPSK (Quadrature Phase Shift Keying), BPSK (Binary Phase Shift Keying) and the like, having a coding rate of 1/2, for example. The modulation sections 101-1 to 101-N determines the modulation scheme of transmitting information of each of users 1 to K based on a subcarrier allocation result for the users 1 to K, which is stored in the allocation result storage section 109, and modulation scheme allocation information $r_p$, n = 1, 2,...., N inputted from the subcarrier/modulation scheme allocation processing section 108. Additionally, the modulation sections 101-1 to 101-N modulates the transmitting information of each of the users 1 to K, thus outputs modulation signals $x_1, x_2,....,X_N$ to the IFFT section 102.

The IFFT section 102 performs an inverse fast Fourier transform for subcarrier components of the respective modulation signals $x_1, x_2,..., X_N$, which have been inputted from the modulation sections 101-1 to 101-N, to convert them to a time domain. The IFFT section 102 outputs a time waveform signal to the GI insertion section 103.

The GI insertion section 103 inserts a guard interval, which improves characteristics for delays, in the time waveform signal inputted from the IFFT section 102, and outputs it to the transmitting RF section 104.

The transmitting RF (Radio Frequency) section 104 up-converts the time waveform signal, which is inputted from the GI inserting section 103, to a RF band, and transmits an OFDM signal from the transmitting/receiving duplex antenna 105.

The receiving RF section 106 receives a signal transmitted from a receiving apparatus of each of the users 1 to K, from the transmitting/receiving duplex antenna 105, and outputs the received signal to the channel quality information picking-up section 107.

The channel quality information picking-up section 107 picks up channel quality information, which has been transmitted from the receiving apparatus of each of the users 1 to K, from the received signal inputted from the receiving RF section 106, and outputs the channel quality information to the subcarrier/modulation scheme allocation processing section 108.

The subcarrier/modulation scheme allocation processing section 108 allocates a subcarrier and a modulation scheme to each of the users 1 to K based on the channel quality information (receiving SNR) of each of the users 1 to K, which is inputted from the channel quality information picking-up section 107 as well as based on QoS (Quality of Service) (for example, a required data transmitting rate and a bit error rate of each of the users), which is set for transmitting information of each of the users 1 to K. The subcarrier/modulation scheme allocation processing section 108 stores matrix data $[\alpha_{k,n}]_{K\times N}$ as a subcarrier allocation result in the allocation result storage section 109, and outputs modulation scheme allocation information to the modulation sections 101-1 to 101-N.

The allocation result storage section 109 stores the matrix data $[\alpha_{k,n}]_{K\times N}$ in which the subcarrier allocation results for the users 1 to K, inputted from the subcarrier/modulation scheme allocation processing section 108, have been set.

The receiving RF section 202 receives the OFDM signal from the transmitting/receiving duplex antenna 201, and outputs the OFDM signal to the GI removing section 203 and to the subcarrier and modulation scheme allocation information picking-up section 209.

The GI removing section 203 removes the guard interval from the OFDM signal which has been inputted from the receiving RF section 202, and outputs the OFDM signal to the FFT section 204.

The FFT section 204 performs a fast Fourier transform (FFT) for the OFDM signal which has been inputted from the GI removing section 203, and from which the guard interval has been removed, to convert the OFDM signal from the time domain to the frequency domain. Symbol signals $x'_1, x'_2,...,$and $x'_N$ transmitted by the plurality of subcarriers are picked up by the FFT, and outputted to the equalizer 206 and the channel quality estimation section 205.

The channel quality estimation section 205 calculates a receiving SNR of each of the symbol signals $x'_1, x'_2,...,$ and $x'_N$ inputted from the FFT section 204, and estimates channel quality thereof. The channel quality estimation section 205 outputs each of the pieces of the channel quality information to the equalizer 206 and the transmitting RF section 210.

The equalizer 206 corrects distortion components of amplitudes and phases, included in the respective symbol signals inputted from the FFT section 204, based on each of the pieces of the channel quality information (transmission channel information $h_{k0,n}$ (n = 1,...,and N) of the k0-th user inputted from the channel quality estimation section 205, and outputs the symbol signals to the demodulation sections 207-1 to 207-N.

The demodulation sections 207-1 to 207-N respectively have demodulation functions corresponding to the modulation sections 101-1 to 101-N, and determines a demodulation scheme of the symbol signals of the subcarriers of the user k0 inputted from the equalizer 206, based on the subcarrier and modulation scheme allocation information of the user k0, which has been inputted from the subcarrier and modulation scheme allocation information picking-up section 209. The demodulation sections 207-1 to 207-N demodulate the symbol signals of the user k0 inputted from the equalizer 206, which has been corrected, and detects the symbol signals, thus output parallel data to the P/S section 208.

The P/S section 208 converts the parallel data of the user k0 inputted from the demodulation sections 207-1 to 207-N to serial data, and thereafter outputs the serial data as desired receiving data of the user k0.

The subcarrier and modulation scheme allocation information picking-up section 209 picks up the subcarrier and modulation scheme allocation information of the user k0 from the OFDM signal inputted from the receiving RF section 202, and outputs them to the demodulation sections 207-1 to 207-N.

The transmitting RF section 210 transmits the channel quality information of the user k0, which has been inputted from the channel quality estimation section 205, from the transmitting/receiving duplex antenna 201.

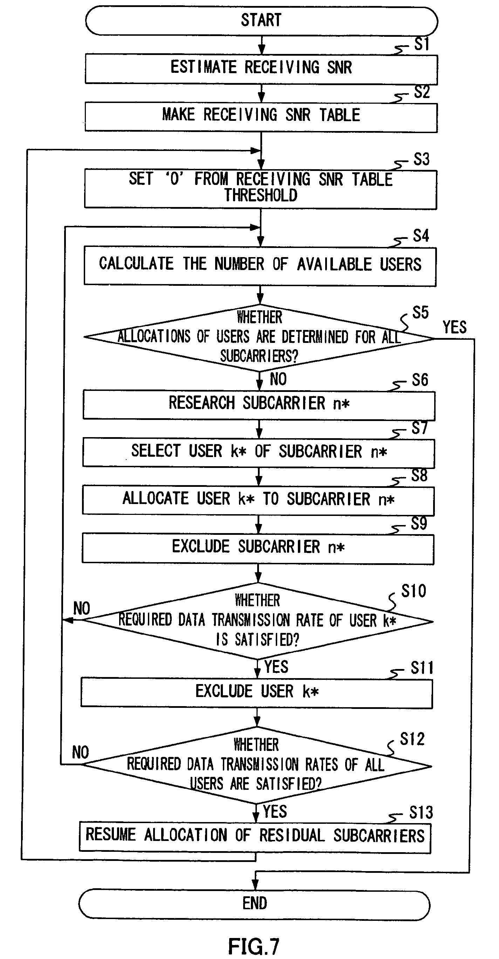

Next, an operation of the subcarrier/modulation scheme allocation processing section 108 in the transmitting apparatus 100 having the above described constitution will be described by use of the flowchart shown in Fig. 7.

Note that in the subcarrier/modulation scheme allocation processing section 108, the allocation of the subcarriers is performed based on the parameters including not only the number of the available users U(n) described in the prior art but also the receiving SNR $(g_{k,n})$. To be concrete, the subcarrier n* having the small number of the available users U(n) is allocated to the user k* showing a high receiving SNR $(g_{k,n})$.

In this case, the subcarrier n* and the user k* are expressed by the following Equations (1) and (2), and they are properly used in the flowchart of Fig. 7(2). Equation (1) represents that a subcarrier having the smallest number of the available users U(n) is an argument of the subcarrier n*, and Equation (2) represents that a user showing the highest receiving SNR value is an argument of the user k*. Note that, in the following processing, the case where the number of the users K is 4 (k = 1 to 4) and the number of the subcarriers N is 4 (n = 1 to 4) will be explained.

$$n^* = \arg \min_{n \in \{n | U(n) \neq 0\}} U(n) \quad \text{...Equation (1)}$$

$$k^* = \arg \max_{1 \leq k \leq K} g_{k,n^*} \quad \text{...Equation (2)}$$

First, in Step S1, the receiving SNR of the user k0 for each of all of the subcarriers 1 to 4 is estimated by the channel quality estimation section 205. The user k0 is one user among the four users.

Subsequently, in Step S2, the table of the receiving SNRs of the users 1 to 4 for all of the subcarriers 1 to 4 is made based on the channel quality information of the user k0 (receiving SNRs for all of the subcarriers 1 to 4), which has been feed-backed from the channel quality information picking-up section 107, as well as based on the channel quality information of three other users (receiving SNRs for all of the subcarriers 1 to 4).

Next, in Step S3, a threshold of each of the receiving SNRs is determined by the required quality (bit error rate, for example, BER = $10^{-2}$) of each of the users, and "0" is set for elements having a receiving SNR value equal to or below the receiving SNR threshold (for example, the receiving SNR value is equal to or below 1.5 dB when the threshold of each user is 1.5 dB) in the receiving SNR table. Herein, the receiving SNR table made shall be composed of the panes drawn by the thin lines in Fig. 1.

Subsequently, in Step S4, based on the receiving SNR values of the users 1 to 4 for all of the subcarriers 1 to 4 in the receiving SNR table made in Step S2, the number of the available users U(n) of each subcarrier is calculated. The calculation results are shown in the row portion composed of the panes drawn by the thick lines in Fig. 1.

Next, in Step S5, it is decided whether the allocations of the users 1 to 4 are determined for all of the subcarriers 1 to 4. Herein, since the users 1 to 4 are not allocated for the subcarriers 1 to 4 yet, the procedure advances to Step S6.

Subsequently, in Step S6, the subcarriers n* having the smallest number of the available users U(n) calculated in Step S4 are searched.

Next, in Step S7, the user k* showing the highest receiving SNR value among the subcarriers n* having the smallest number of the available users U (n) searched in Step S6 is searched. When there are two or more subcarriers n* having the smallest number of the available users U(n) in Step S6, the user k* showing the highest receiving SNR value is selected among the two or more subcarriers n* in Step S7.

Subsequently, in Step S8, the user k* is allocated to the subcarrier n*.

Then, in Step S9, in order to exclude the subcarrier n*, for which the allocation was determined in step 8, from the objects to whom the subcarriers are to be allocated in the receiving SNR table, the SNR values of the subcarrier 3 for all of the users 1 to 4 are set to "0". This result is shown in Fig. 2.

Subsequently, in Step S10, it is decided whether the allocation result of the subcarrier of this time satisfies a required data transmission rate of the user k*. Specifically, it is decided whether the allocation result satisfies the required data transmission rate $B_k$ of the users 1 to K set in the transmitting information in Fig. 1.

When the allocation result of the subcarrier n* of this time does not satisfies the required data transmission rate of the user k*, the procedure returns to Step S4, and the procedure is carried out again from the processing of calculating the number of the users U(n) available for each of the subcarriers 1 to 4. Furthermore, when the allocation result of the subcarrier n* of this time satisfies the required data transmission rate of the user k*, the procedure advances to Step S11.

Then, in Step S11, the user k* is excluded from the objects to whom the subcarriers are to be allocated in the receiving SNR table. Specifically, since the allocation of the subcarrier satisfying the required data transmission rate has been completed, the user k* is temporarily excluded from the objects to whom the subcarriers are to be allocated until the allocation of the subcarrier for other users is completed.

Subsequently, in Step S12, it is decided whether the allocation of the subcarrier satisfying the required data transmission rate of all of the users 1 to 4 has been completed. When the allocation of the subcarrier has not been completed, the procedure returns to Step S4 and the procedure is carried out again from the processing of calculating the number of the users U(n) available for each of the subcarriers. Furthermore, when the allocation of the subcarrier has been completed, the procedure advances to Step S13.

In step S13, the subcarriers which have already been allocated are excluded from the receiving SNR table, and the allocations of the residual subcarriers for all of the users are resumed.

By the above-described processings, the allocations of the subcarriers satisfying the required data transmission rate of all of the users 1 to 4 have been finished.

Then, the procedure returns to Step S3, and the processing of the allocations of the residual subcarriers for all of the users 1 to 4 based on the receiving SNR is carried out repeatedly.

In the subsequent subcarrier allocation processing, since the allocations of the subcarriers satisfying the user required qualityof all of the users have already been finished, the decision processings of the required data transmission rate in Steps 10 and 12 are not carried out, and the subcarriers are allocated to users showing high receiving SNR values preferentially.

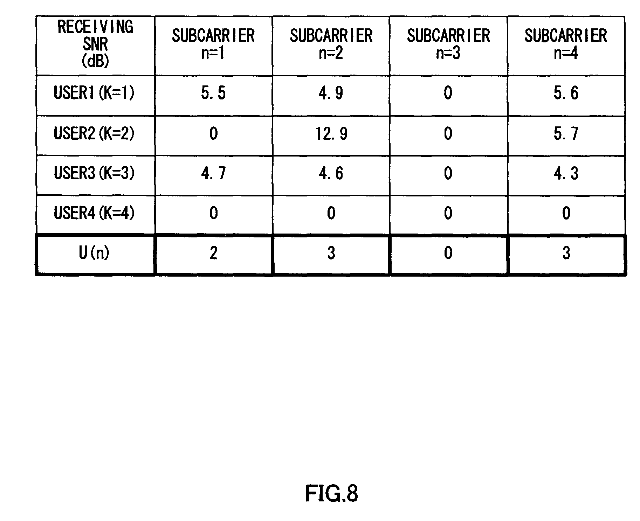

Next, an example in which the subcarriers 1 to 4 are allocated to the users 1 to 4 based on the above described subcarrier allocation processingwill be concretely described with reference to Figs. 8 to 10.

First, in the subcarrier/modulation scheme allocation processing section 108, based on the channel quality information (the receiving SNR of all subcarriers 1 to 4 for each of all of the users 1 to 4) of each of the users 1 to 4, which are transmitted from the channel quality estimation section (in the case of the user k0, 205) of the receiving apparatus, the receiving SNR table of all subcarriers 1 to 4 for the users 1 to 4 is made, and the threshold of the receiving SNR is determined depending on the required quality (bit error rate) of each of all of the users. Thus, the initial receiving SNR table inwhich "0" is set to elements having a receiving value equal to or below the receiving SNR threshold(for example, the receiving SNR value is equal to or below 1.5 dB when the threshold of each user is equally 1.5 dB) is shown in Fig. 1.

In the receiving SNR table of Fig. 1, since the subcarrier 3 has the smallest number of the available users U (n) (U(3) = 2), the allocation of the subcarrier 3 is performed preferentially under the condition of Equation (1). In this case, when the receiving SNR values of the users 2 and 4 to whom the subcarrier 3 can be allocated are compared with each other, the receiving SNR value of the user 4, which is equal to 10.9 dB, is higher than that of the user 2, which is equal to 4.9 dB. Consequently, the subcarrier 3 is allocated to the user 4 (refer to Equation (2)).

Since the allocation of the subcarrier 3 has been finished, the receiving SNR values of the users for the subcarrier 3 are set to be zero. Furthermore, it is decided whether the required qualityof the user 4 is satisfied. In the interests of simplicity, the users 1 to 4 shall set required qualities equal to each other, for example, 64 kbps.

Assuming that an OFDM frame length be 0.5 ms and one OFDM frame contains data of 32 OFDM symbols, if one user allocates one subcarrier in the case of a QPSK modulation scheme and a turbo code of R = 1/2, the data transmission rate of 64 kbps can be achieved.

Accordingly, since the user 4 satisfies the required quality, the user 4 is excluded from the objects to whom the subcarriers are to be allocated until other users 1 to 3 come to satisfy the required quality. As a result, the receiving SNR values of the users 1 to 4 for the subcarrier 3 are set to "0". Thereafter, the number of the available users U(n) is newly calculated, and the updated receiving SNR table is shown in Fig. 8.

In the receiving SNR table of Fig. 8, the subcarrier 1 has the smallest number of the available users U(n) (U (1) = 2), the allocation of the subcarrier 1 is performed preferentially under the condition of Equation (1). In this case, when the receiving SNR values of the users 1 and 3 to whom the subcarrier 1 can be allocated are compared with each other, the receiving SNR value of the user 1, which is equal to 5.5 dB, is higher than that of the user 3, which is equal to 4.7 dB. Consequently, the subcarrier 1 is allocated to the user 1 (refer to Equation (2)).

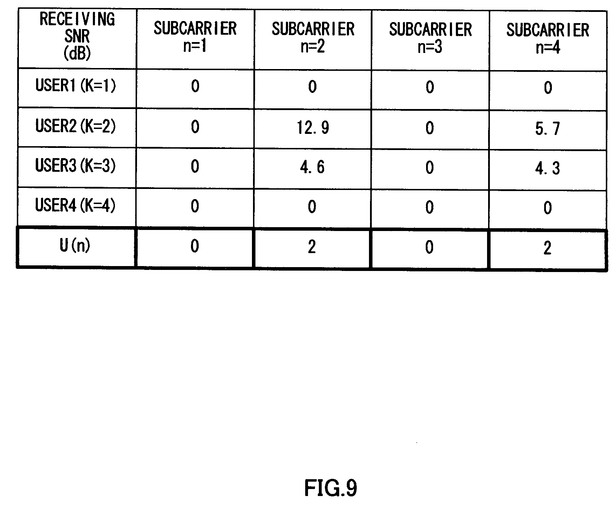

In this case, since the user 1 satisfies the required quality, the user 1 is excluded from the objects to whom the subcarriers are to be allocated until other users 2 and 3 come to satisfy the required quality. As a result, the receiving SNR values of the users 1 to 4 for the subcarrier 1 are set to "0". Thereafter, the number of the available users U(n) is newly calculated, and the updated receiving SNR table is shown in Fig. 9.

In the receiving SNR table of Fig. 9, the subcarriers 2 and 4 have the smallest number of the available users U2 (U(2) and U(4), which are equally two). Since the receiving SNR value (12.9 dB) of the user 2 for the subcarrier 2 is highest, the subcarrier 2 is allocated to the user 2 (refer to Equation (2)).

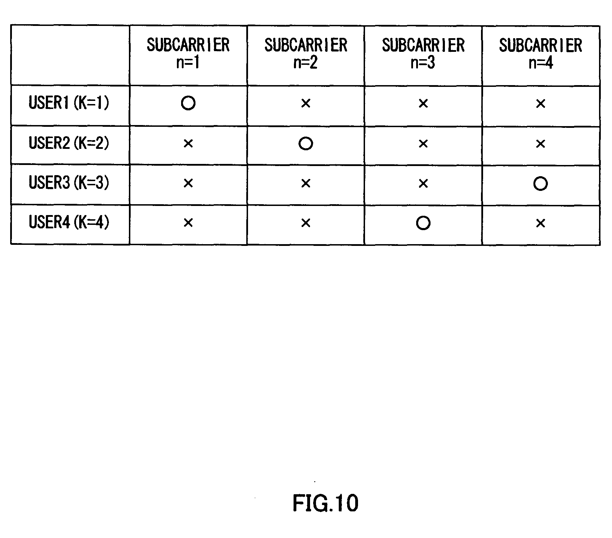

Thereafter, when the receiving SNR values of the users 1 to 4 for the subcarrier 2 are set to "0", the residual subcarrier 4 is allocated to the user 3. The allocation results of the subcarriers 1 to 4 to the users 1 to 4 are shown in Fig. 10 (○: used, ×: unused).

Although the case where the users 1 to 4 set the required qualities equal to each other in the above described subcarrier allocation processing were described, the case where each of the users 1 to 4 set the required qualities which are different from each other is applicable similarly. Furthermore, although the case where the SNR thresholds of each of the users were equal to each other was described, the case where the SNR thresholds (bit error rate) which are different from each other are set is applicable similarly.

In the subcarrier/modulation scheme allocation processing section 108, among the subcarriers n* having the smallest number of the available users U(n), the subcarrier is allocated preferentially to the user k* showing the receiving SNR value equal to or above the receiving SNR threshold , which has been determined by the required quality (bit error rate) of the user.

In the descriptions ever performed, a fixed modulation for transmission channel coding (for example, QPSK) was described. However, the present invention is also applicable to 64QAM, 16QAM, QPSK and BPSK by use of the Modulation Coding Schemes (MCS) and a turbo code having, for example, a coding rate of 1/2.

In this case, it is possible to allocate the Modulation Coding Schemes (MCS) showing the highest bit rate capable of satisfying required quality (error bit rate) of a user, along with a subcarrier.

For example, when a receiving SNR threshold to which 64QAM is allocated is set to 10.5 dB, subcarriers capable of being transmitted by the 64QAM are allocated to each of the users by carrying out the subcarrier allocation processing of Fig. 7. The plurality of subcarriers allocated at this time are excluded from the receiving SNR table, and excluded from the objects to whom the subcarriers are to be allocated in subsequent subcarrier allocation processings.

From that time forward, the receiving SNR threshold to which the 16QAM is allocated is set to 6.0 dB, the receiving SNR threshold to which the QPSK is allocated is set to 1.5 dB, and the receiving SNR threshold to which the BPSK is allocated is set to -2.0 dB in a similar manner. Subsequently, the subcarrier allocation processing is repeatedly carried out, and thus the subcarriers and the modulation scheme can be allocated so that they satisfy the required quality (bit error rate) of the users respectively.

As described above, according to the transmitting apparatus 100 of this embodiment, since the subcarrier having the small number of the available users is allocated to the user showing good channel quality preferentially, a throughput of the whole OFDM system can be improved.

Furthermore, since the subcarrier is allocated so that the required data transmission rate of the user is satisfied and since the user to whom the subcarrier has been already allocated is excluded from the objects to whom the subcarriers are to be allocated, the subcarrier can be allocated to all of the users with fairness.

Still furthermore, by setting the receiving SNR threshold corresponding to the Modulation Coding Schemes, the modulation scheme showing the highest bit rate, which is capable of satisfying the required quality (bit error rate) of the user, can be allocated together with the subcarrier, and a throughput of the whole OFDM system can be improved.

The specification of this application is based on Japanese Patent Application No. 2003-23814 filed on January 31, 2003. The contents described in this specification of this application are incorporated herein by reference.

Industrial Applicability

The present invention can be applied to a multicarrier transmitting apparatus and a multicarrier receiving apparatus, which are loaded on a mobile station apparatus and a base station apparatus in a mobile communication system.

**Claims**

1. A multicarrier transmitting apparatus performing a radio communication by use of a plurality of frequencies, the multicarrier transmitting apparatus comprising:

    a receiving section that receives channel quality information from a receiving apparatus of each user;
    a calculation section that calculates the number of users available for each subcarrierbasedon channel quality information of each user received by the receiving section;
    a selection section that selects a subcarrier having the small number of the available users based on a calculation result by the calculation section; and
    an allocation section that allocates the subcarrier, selected by the selection section, to a user showing good channel quality among the users included in the number of the available users, who are the objects to whom the subcarriers are to be allocated.

2. The multicarrier transmitting apparatus according to claim 1,
    wherein the allocation section sets required quality of each of the users based on the channel quality information, and allocates the subcarrier selected by the selection section to a user whose channel quality satisfies the required quality among the users included in the number of the available users who are the objects to whom the subcarriers are to be allocated.

3. The multicarrier transmitting apparatus according to claim 1,
    wherein the allocation section excludes the user to whom the subcarrier was allocated from the objects to whom the subcarriers are to be allocated until the allocations of the subcarriers to other users are finished.

4. A multicarrier receiving apparatus performing a radio communication with the multicarrier transmitting apparatus defined in claim 1, the multicarrier receiving apparatus comprising:

an estimation section that estimates channel quality information related to channel quality of each subcarrier; and

a transmitting section that transmits the channel quality information estimated by the estimation section.

5. A multicarrier radio communication method in a multicarrier transmitting apparatus performing a radio communication by use of a plurality of frequencies, the multicarrier radio communication method comprising:

a receiving step of receiving channel quality information from a receiving apparatus of each user;

a calculation step of calculating the number of the users available for each of subcarriers, based on the channel quality information of each of the users received in the receiving step;

a selection step of selecting a subcarrier having the small number of the available users based on a calculation result in the calculation step; and

an allocation step of allocating the subcarrier selected in the selection step to a user showing the good channel quality among the users included in the number of the available users who are the objects to whom the subcarriers are to be allocated.

6. A multicarrier radio communication method in a multicarrier receiving apparatus performing a radio communication with a multicarrier transmitting apparatus using the multicarrier radio communication method defined in claim 5, the multicarrier radio communication method comprising:

an estimation step of estimating channel quality information related to channel quality of each subcarrier; and

a transmission step of transmitting the channel quality information estimated in the estimation step.

| RECEIVING SNR (dB) | SUBCARRIER n=1 | SUBCARRIER n=2 | SUBCARRIER n=3 | SUBCARRIER n=4 | S(K) |
|---|---|---|---|---|---|
| USER1 (K=1) | 5.5 | 4.9 | 0 | 5.6 | 3 |
| USER2 (K=2) | 0 | 12.9 | 4.9 | 5.7 | 3 |
| USER3 (K=3) | 4.7 | 4.6 | 0 | 4.3 | 3 |
| USER4 (K=4) | 6.7 | 6.0 | 10.9 | 3.3 | 4 |
| U(n) | 3 | 4 | 2 | 4 | |

FIG.1

| RECEIVING SNR (dB) | SUBCARRIER n=1 | SUBCARRIER n=2 | SUBCARRIER n=3 | SUBCARRIER n=4 | S(K) |
|---|---|---|---|---|---|
| USER1 (K=1) | 5.5 | 4.9 | 0 | 5.6 | 3 |
| USER2 (K=2) | 0 | 12.9 | 0 | 5.7 | 2 |
| USER3 (K=3) | 4.7 | 4.6 | 0 | 4.3 | 3 |
| USER4 (K=4) | 6.7 | 6.0 | 0 | 3.3 | 3 |
| U(n) | 3 | 4 | 0 | 4 | |

FIG.2

EP 1 596 515 A1

| RECEIVING SNR (dB) | SUBCARRIER n=1 | SUBCARRIER n=2 | SUBCARRIER n=3 | SUBCARRIER n=4 | S (K) |
|---|---|---|---|---|---|
| USER1 (K=1) | 5.5 | 0 | 0 | 5.6 | 2 |
| USER2 (K=2) | 0 | 0 | 0 | 5.7 | 1 |
| USER3 (K=3) | 4.7 | 0 | 0 | 4.3 | 2 |
| USER4 (K=4) | 6.7 | 0 | 0 | 3.3 | 2 |
| U (n) | 3 | 0 | 0 | 4 | |

FIG.3

EP 1 596 515 A1

|  | SUBCARRIER n=1 | SUBCARRIER n=2 | SUBCARRIER n=3 | SUBCARRIER n=4 |
|---|---|---|---|---|
| USER1 (K=1) | ○ | × | × | × |
| USER2 (K=2) | × | ○ | ○ | ○ |
| USER3 (K=3) | × | × | × | × |
| USER4 (K=4) | × | × | × | × |

FIG.4

EP 1 596 515 A1

START

S101

RESEARCH USER k HAVING THE
SMALLEST NUMBER OF AVAILABLE
SUBCARRIERS

S102

SELECT SUBCARRIER n FOR USER k

S103

ALLOCATE SUBCARRIER n TO USER k

END

FIG.5

FIG.6

EP 1 596 515 A1

START

ESTIMATE RECEIVING SNR — S1

MAKE RECEIVING SNR TABLE — S2

SET '0' FROM RECEIVING SNR TABLE THRESHOLD — S3

CALCULATE THE NUMBER OF AVAILABLE USERS — S4

WHETHER ALLOCATIONS OF USERS ARE DETERMINED FOR ALL SUBCARRIERS? — S5   YES

NO

RESEARCH SUBCARRIER n* — S6

SELECT USER k* OF SUBCARRIER n* — S7

ALLOCATE USER k* TO SUBCARRIER n* — S8

EXCLUDE SUBCARRIER n* — S9

WHETHER REQUIRED DATA TRANSMISSION RATE OF USER k* IS SATISFIED? — S10   NO

YES

EXCLUDE USER k* — S11

WHETHER REQUIRED DATA TRANSMISSION RATES OF ALL USERS ARE SATISFIED? — S12   NO

YES

RESUME ALLOCATION OF RESIDUAL SUBCARRIERS — S13

END

FIG.7

16

| RECEIVING SNR (dB) | SUBCARRIER n=1 | SUBCARRIER n=2 | SUBCARRIER n=3 | SUBCARRIER n=4 |
|---|---|---|---|---|
| USER1 (K=1) | 5.5 | 4.9 | 0 | 5.6 |
| USER2 (K=2) | 0 | 12.9 | 0 | 5.7 |
| USER3 (K=3) | 4.7 | 4.6 | 0 | 4.3 |
| USER4 (K=4) | 0 | 0 | 0 | 0 |
| U(n) | 2 | 3 | 0 | 3 |

FIG.8

EP 1 596 515 A1

| RECEIVING SNR (dB) | SUBCARRIER n=1 | SUBCARRIER n=2 | SUBCARRIER n=3 | SUBCARRIER n=4 |
|---|---|---|---|---|
| USER1 (K=1) | 0 | 0 | 0 | 0 |
| USER2 (K=2) | 0 | 12. 9 | 0 | 5. 7 |
| USER3 (K=3) | 0 | 4. 6 | 0 | 4. 3 |
| USER4 (K=4) | 0 | 0 | 0 | 0 |
| U (n) | 0 | 2 | 0 | 2 |

FIG.9

|  | SUBCARRIER n=1 | SUBCARRIER n=2 | SUBCARRIER n=3 | SUBCARRIER n=4 |
|---|---|---|---|---|
| USER1 (K=1) | ○ | × | × | × |
| USER2 (K=2) | × | ○ | × | × |
| USER3 (K=3) | × | × | × | ○ |
| USER4 (K=4) | × | × | ○ | × |

FIG.10

**EP 1 596 515 A1**

<div align="center">

**INTERNATIONAL SEARCH REPORT**

</div>

| | International application No. |
|---|---|
| | PCT/JP2004/000692 |

**A. CLASSIFICATION OF SUBJECT MATTER**
Int.Cl$^7$ H04J11/00

According to International Patent Classification (IPC) or to both national classification and IPC

**B. FIELDS SEARCHED**

Minimum documentation searched (classification system followed by classification symbols)
Int.Cl$^7$ H04J11/00

Documentation searched other than minimum documentation to the extent that such documents are included in the fields searched
Jitsuyo Shinan Koho          1926–1996   Toroku Jitsuyo Shinan Koho   1994–2004
Kokai Jitsuyo Shinan Koho   1971–2004   Jitsuyo Shinan Toroku Koho   1996–2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | Masahiro URA, Yoshitaka HARA, Toshihide KAMIO, "Kokoritsu Deta Tsushin'yo MC-CDMA Hoshiki no Ichikento", The Institute of Electronics, Information and Communication Engineers Gijutsu Kenkyu Hokoku, Vol.100, No.664, 09 March, 2001 (09.03.01), pages 105 to 110 | 1–6 |
| Y | Osamu MUROTA, Yoshihiko AKAIWA, "Shuhasu Sentakusei Fading-ka deno Tekio Channel Sentaku Hoshiki", The Transactions of the Institute of Electronics, Information and Communication Engineers, Vol.J-82-B, No.5, 25 May, 1999 (25.05.99), pages 991 to 1000 | 1–6 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 May, 2004 (06.05.04) | 18 May, 2004 (18.05.04) |

| Name and mailing address of the ISA/ | Authorized officer |
|---|---|
| Japanese Patent Office | |
| Facsimile No. | Telephone No. |

Form PCT/ISA/210 (second sheet) (January 2004)